# EUROPÄISCHE PATENTSCHRIFT

(11) **EP 2 411 680 B1**
(45) Veröffentlichungstag und Bekanntmachung des Hinweises auf die Patenterteilung: **08.06.2016**
(21) Anmeldenummer: 10705801.8
(22) Anmeldetag: 16.02.2010
(51) Int. Cl.: F15B 15/14, F16J 15/32

(54) **FLUIDBETÄTIGTER ARBEITSZYLINDER**
FLUID ACTUATED WORKING CYLINDER
VÉRIN FLUIDIQUE

(30) Priorität: 25.03.2009 DE 102009014814
(43) Veröffentlichungstag der Anmeldung: 01.02.2012
(73) Patentinhaber: FESTO AG & Co. KG, 73734 Esslingen (DE)
(72) Erfinder: RÖHRIG, Harald, 66583 Spiesen-Elversberg (DE); KEES, Ulrich, 66424 Homburg (DE)
(74) Vertreter: Patentanwälte Magenbauer & Kollegen Partnerschaft mbB
(86) Internationale Anmeldenummer: PCT/EP2010/000929
(87) Internationale Veröffentlichungsnummer: WO 2010/108573

(56) Entgegenhaltungen:
- EP-A1- 1 323 958
- EP-A2- 1 288 538
- EP-A2- 1 978 263
- DE-U1- 20 104 060
- US-A- 3 693 500
- US-A- 4 363 261
- US-A1- 2003 145 723
- US-A1- 2007 013 229

## Beschreibung

Die Erfindung betrifft einen fluidbetätigten Arbeitszylinder, mit einem Gehäuse, das wenigstens einen den Durchtritt einer Kolbenstange ermöglichenden Gehäusedurchgang aufweist, in dem eine Lagerbuchse unter Einnahme einer Arbeitsposition aufgenommen ist, an der im Bereich ihrer vom Gehäuse wegweisenden vorderen Stirnseite ein ringförmiger Abstreifer fixiert ist, wobei der Abstreifer derart lösbar an der Lagerbuchse befestigt ist, dass er bei in der Arbeitsposition verbleibender Lagerbuchse von dieser und dem Gehäuse abnehmbar ist.

Bei einem aus der EP 1 322 867 B1 bekannten Arbeitszylinder sitzt in einem von einer Kolbenstange durchsetzten Gehäusedurchgang eine die Kolbenstange umschließende Lagerbuchse, die mit einem an ihrer Vorderseite angeordneten ringförmigen Abstreifer und einer an ihrer Rückseite angeordneten ringförmigen Dichtung zu einer Baueinheit zusammengefasst ist. Alle drei Komponenten sind insbesondere stoffschlüssig fest miteinander verbunden. Die Baueinheit ist im Rahmen eines Steck-Dreh-Vorganges im Gehäusedurchgang fixiert, zu welchem Zweck an der Lagerbuchse mehrere radial abstehende Befestigungsvorsprünge vorhanden sind, die in einen Befestigungsschlitz eingreifen, wenn die Lagerbuchse bei der Montage in ihre Arbeitsposition verdreht wird. Durch kraftschlüssigen Kontakt oder Rasteingriff mit dem Gehäuse ist die Lagerbuchse verdrehgesichert. Da im Falle eines Verschleißes des Abstreifers die gesamte Baueinheit ausgetauscht werden muss, ist die Anordnung mit relativ hohen Wartungskosten verbunden. Außerdem können bei entfernter Baueinheit Verunreinigungen ins Innere des Gehäuses eintreten, die möglicherweise Folgeschäden nach sich ziehen.

Die EP 0 208 839 A2 beschreibt einen Arbeitszylinder, bei dem der Abstreifer lösbar an der Lagerbuchse fixiert ist. Der Abstreifer wird von einem mehrfach geschlitzten Fortsatz der Lagerbuchse umgriffen, der zum Festhalten des Abstreifers radial zusammengedrückt wird, wenn die Lagerbuchse in den Gehäusedurchgang eingesteckt wird. Zum Austauschen des Abstreifers muss auch hier die Lagerbuchse aus ihrer Arbeitsposition entfernt und aus dem Gehäusedurchgang entnommen werden.

Die DE 44 08 408 C1, DE 32 07 999 A1, DE 40 10 953 A1 und EP 0 964 190 A2 offenbaren jeweils Bauformen von Arbeitszylindern, die ein Auswechseln des Abstreifers ermöglichen, ohne zugleich auch die Lagerbuchse aus ihrer Arbeitsposition in dem Gehäusedurchgang entfernen zu müssen. Allerdings ist dies hier nur möglich, weil der Abstreifer nicht an der Lagerbuchse, sondern direkt am Gehäuse befestigt ist.

Aus der US 3,693,500 A ist ein fluidbetätigter Arbeitszylinder bekannt, der einen innerhalb eines Zylinders hin und her bewegbaren Plunger aufweist, wobei der Plunger an der Vorderseite des Zylinders von einer Lagerbuchse umschlossen ist. An dieser Lagerbuchse ist mittels mehrerer Schrauben ein den Plunger umschließender Abstreifer befestigt.

Es ist die Aufgabe der vorliegenden Erfindung, einen Arbeitszylinder zu schaffen, der über einen wartungsfreundlichen Aufbau verfügt.

Zur Lösung dieser Aufgabe ist in Verbindung mit den eingangs genannten Merkmalen vorgesehen, dass die Lagerbuchse durch Verdrehen um ihre Längsachse in die Arbeitsposition und aus der Arbeitsposition bewegbar ist, wobei sie in der Arbeitsposition durch den an ihr befestigten Abstreifer bezüglich dem Gehäuse verdrehgesichert ist.

Auf diese Weise erübrigen sich am Gehäuse des Arbeitszylinders aufwändig herzustellende Maßnahmen zur axialen Fixierung des Abstreifers. Der Abstreifer ist als eigenständiges Bauteil an der Lagerbuchse befestigt und kann im Verschleißfalle leicht ausgewechselt werden. Da die Lagerbuchse hierbei an Ort und Stelle in dem Gehäusedurchgang verbleiben kann, bleibt der zwischen der Kolbenstange und der Wandung des Gehäusedurchgangs vorhandene Ringspalt verschlossen, so dass keine Verunreinigungen eindringen können, die möglicherweise Folgeschäden verursachen würden. Die zur gegenseitigen lösbaren Fixierung am Abstreifer und an der Lagerbuchse erforderlichen geometrischen Maßnahmen können bei der Einzelherstellung dieser Komponenten ohne großen Aufwand mit ausgebildet werden. Maßnahmen zur direkten axial unbeweglichen Verriegelung des Abstreifers bezüglich des Gehäuses sind nicht erforderlich. Die Befestigungsmaßnahmen für die Lagerbuchse sind so ausgebildet, dass das Verbringen der Lagerbuchse in die Arbeitsposition und aus der Arbeitsposition im Rahmen einer Drehbewegung stattfindet. Der Abstreifer wird hierbei genutzt, um die Lagerbuchse in der Arbeitsposition bezüglich dem Gehäuse unverdrehbar zu fixieren. Der Abstreifer bewirkt also im an der Lagerbuchse befestigten Zustand eine Verdrehsicherung der Lagerbuchse in der Arbeitsposition.

Vorteilhafte Weiterbildungen der Erfindung gehen aus den Unteransprüchen hervor.

Zur lösbaren Fixierung des Abstreifers an der Lagerbuchse sind zweckmäßigerweise Rastverbindungsmittel vorhanden, die lösbar in Eingriff miteinander stehen. So kann der Abstreifer insbesondere einen oder mehrere, in Richtung zur Lagerbuchse wegragende Rasthaken aufweisen, die jeweils hinter eine an der Lagerbuchse ausgebildete Rastkante einschnappen, wenn der Abstreifer axial auf die Lagerbuchse aufgesteckt wird. Die Anordnung von Rasthaken und Rastkanten kann auch vertauscht sein. Insbesondere durch zumindest partiell abgeschrägte Gestaltung der miteinander kooperierenden Flächen an den Rasthaken und den Rastkanten kann gewährleistet werden, dass der Rasteingriff mit geringem Kraftaufwand gelöst werden kann, gleichzeitig aber der für den Betrieb des Arbeitszylinders erforderliche Zusammenhalt der beiden Komponenten gewährleistet ist.

Was die Fixierung der Lagerbuchse anbelangt, ist diese in ihrer Arbeitsposition zweckmäßigerweise gänzlich ohne Mitwirkung des Abstreifers axial unbeweglich bezüglich dem Gehäuse fixiert. Die Lagerbuchse kann hierzu einen oder mehrere nach radial außen abstehende Befestigungsvorsprünge aufweisen, die jeweils eine fest mit dem Gehäuse verbundene, axial in Richtung zum Inneren des Gehäuses weisende Abstützfläche hintergreifen, wenn die Lagerbuchse ihre Arbeitsposition einnimmt.

Zweckmäßig ist eine dahingehende Ausgestaltung der Befestigungsmaßnahmen, dass die Lagerbuchse mittels eines Steck-Dreh-Vorganges in die Arbeitsposition verbringbar ist. Hierbei kann sie ohne den daran fixierten Abstreifer axial in den Gehäusedurchgang eingesteckt und anschließend in die Arbeitsposition verdreht werden. In einem darauffolgenden Montagevorgang wird der Abstreifer so eingesetzt, dass er die angesprochene Verdrehsicherung der Lagerbuchse hervorruft.

Zweckmäßigerweise bewirkt der Abstreifer die Verdrehsicherung der Lagerbuchse dadurch, dass zum einen er selbst bezüglich dem Gehäuse verdrehgesichert ist und zum anderen die Lagerbuchse bezüglich dem Abstreifer unverdrehbar verriegelt ist.

Zur bezüglich dem Gehäuse unverdrehbaren Verriegelung der Lagerbuchse verfügt der Abstreifer zweckmäßigerweise über einen oder mehrere sich axial erstreckende Verriegelungsvorsprünge, die sowohl in eine am Gehäuse anordnete Verriegelungsausnehmung eingreifen als auch in eine mit dieser gehäuseseitigen Verriegelungsausnehmung axial fluchtende, an der Lagerbuchse ausgebildete Verriegelungsausnehmung. Auf diese Weise kann mittels des mindestens einen Verriegelungsvorsprunges gleichzeitig sowohl die Verdrehsicherung des Abstreifers bezüglich dem Gehäuse als auch die Verdrehsicherung der Lagerbuchse bezüglich dem Abstreifer und mithin indirekt auch gegenüber dem Gehäuse bewirkt werden. Dies ist mit weniger Aufwand verbunden als bei einer prinzipiell ebenfalls denkbaren Ausführungsform, bei der der Abstreifer mit mindestens einem ersten Verriegelungsvorsprung nur mit dem Gehäuse und nicht auch mit der Lagerbuchse in Verriegelungseingriff steht und zusätzlich mindestens ein zweiter Verriegelungsvorsprung des Abstreifers nur mit der Lagerbuchse und nicht zugleich auch mit dem Gehäuse in Verriegelungseingriff steht.

Die mindestens eine Verriegelungsausnehmung der Lagerbuchse kann sich bei entsprechender Ausstattung an dem gegebenenfalls vorhandenen, nach radial außen ragenden Befestigungsvorsprung befinden, der die axiale Verriegelung der Lagerbuchse bezüglich des Gehäuses hervorruft.

Vorzugsweise sitzt der mindestens eine Verriegelungsvorsprung an einem vom Abstreifer nach radial außen wegragenden Tragvorsprung.

Der Abstreifer kann stirnseitig in den Gehäusedurchgang eintauchen. Um ein Eindringen auch feinster Verunreinigungen wie Staub oder dergleichen in den Gehäusedurchgang zu vermeiden, kann der Abstreifer entlang seines Außenumfanges eine beispielsweise wulstförmige Abdichtkontur aufweisen, die dichtend am Innenumfang des Gehäusedurchganges anliegt.

Zum leichten Entfernen des Abstreifers von der Lagerbuchse können an dem Abstreifer eine oder mehrere nach radial außen abstehende Entnahmelaschen vorhanden sein, die sich bequem mit zwei Fingern einer Hand ergreifen oder mittels eines Werkzeuges zum Heraushebeln des Abstreifers hintergreifen lassen. Wenn die mindestens eine Entnahmelasche gummielastisch verformbar ist, lässt sie sich zum besseren Ergreifen oder Hintergreifen vom Gehäuse des Arbeitszylinders wegbiegen. Zweckmäßigerweise ist die mindestens eine Entnahmelasche versenkt in einer stirnseitig am Gehäuse um den Gehäusedurchgang herum angeordneten Stirnfläche angeordnet, die zu diesem Zweck eine Aussparung aufweisen kann.

Die erfindungsgemäße Maßnahme ist unabhängig von der Innenkontur der Lagerbuchse und des Abstreifers realisierbar. Diese Innenkonturen sind entsprechend der Außenkontur der Kolbenstange des Arbeitszylinders gestaltet. In der Regel sind die Querschnitte entweder kreisförmig oder quadratisch. Da bei einer unkreisförmigen Querschnittskontur der Kolbenstange und des daran angepassten Innenquerschnittes der Lagerbuchse unter Umständen ein Drehmoment von der Kolbenstange in die Lagerbuchse eingeleitet wird, hat bei solchen Bauformen die oben erwähnte, bezüglich dem Gehäuse unverdrehbare Fixierung der Lagerbuchse den Vorteil, dass sie nicht unbeabsichtigt aus der Arbeitsposition herausgedreht wird.

Bei Bedarf kann der Lagerbuchse und/oder dem Abstreifer auch noch eine ringförmige Dichtung zugeordnet sein, die im Zusammenwirken mit dem Außenumfang der Kolbenstange einen Fluid-austritt aus dem Gehäuse verhindert . Die Dichtung ist insbesondere an der dem Abstreifer entgegengesetzten Stirnseite der Lagerbuchse angeordnet und kann, insbesondere durch stoffschlüssige Maßnahmen, unlösbar fest an der Lagerbuchse fixiert sein.

Nachfolgend wird die Erfindung anhand der beiliegenden Zeichnung näher erläutert. In dieser zeigen:
- Figur 1: eine bevorzugte Bauform des erfindungsgemäßen Arbeitszylinders in einer perspektivischem Ansicht schräg von vorne her,
- Figur 2: einen Längsschnitt durch den Arbeitszylinder aus Figur 1 gemäß Schnittlinie II-II, wobei ein Detail vergrößert abgebildet ist,
- Figur 3: einen Querschnitt durch den Arbeitszylinder im Bereich des Gehäusedurchganges gemäß Schnittlinie III-III aus Figuren 1 und 2,
- Figur 4: eine Vorderansicht des Arbeitszylinders mit Blickrichtung gemäß Pfeil IV aus Figur 1, allerdings ohne Darstellung der Kolbenstange, des Abstreifers und der Lagerbuchse,
- Figur 5: den in Figur 2 im Längsschnitt abgebildeten vorderen Endbereich des Arbeitszylinders in einer perspektivischen Ansicht und mit einem vergrößerten Detail,
- Figur 6: die Anordnung aus Figur 5 in einer Explosionsdarstellung,
- Figur 7: die Lagerbuchse und den zugeordneten Abstreifer in einer isolierten Explosionsdarstellung mit Blick von schräg hinten her,
- Figur 8: die die Lagerbuchse und den Abstreifer enthaltende Baugruppe in einer perspektivischen Einzeldarstellung mit Blick von schräg hinten her,
- Figur 9: einen Längsschnitt durch die Baugruppe aus Figur 8 gemäß Schnittlinie IX-IX,
- Figur 10: eine Einzeldarstellung des Abstreifers im Schnitt gemäß der aus Figur 6 ersichtlichen Schnittebene X-X, die bezüglich der Schnittebene IX-IX winkelmäßig versetzt ist, und
- Figur 11: eine modifizierte Bauform einer Lagerbuchse und eines Abstreifers mit quadratischer Innenkontur.

Der in seiner Gesamtheit mit Bezugsziffer 1 bezeichnete fluidbetätigte Arbeitszylinder wird vorwiegend mit Druckluft betrieben. Die Antriebskraft kann aber auch durch andere gasförmige oder durch flüssige Druckmedien aufgebracht werden.

Der Arbeitszylinder besitzt ein in der Regel längliches Gehäuse 2, mit strichpunktiert angedeuteter Längsachse 3, das einen Rohrabschnitt 4 und an den beiden Stirnseiten des Rohrabschnittes 4 angeordnete erste und zweite Abschlusswände 5, 6 aufweist. Eine oder jede Abschlusswand 5, 6 ist zweckmäßigerweise nach Art eines Deckels ausgebildet, der stirnseitig an dem Rohrabschnitt 4 montiert ist. Exemplarisch sind beide Abschlusswände 5, 6 als Deckel gestaltet, die an je eine der beiden Stirnflächen 7 des Rohrabschnittes 4 angesetzt und durch Befestigungsmittel 8 mit dem Rohrabschnitt 4 axial verspannt sind. Die Befestigungsmittel 8 können wenigstens zum Teil als längs des Rohrabschnittes 4 verlaufende Zuganker ausgebildet sein. Dichtungsmittel 12 gewährleisten eine fluiddichte Verbindung des Rohrabschnittes 4 mit jeder Abschlusswand 5, 6.

Der vorzugsweise als Strangpreßkörper ausgebildete Rohrabschnitt 4 begrenzt mit den beiden Abschlusswänden 5, 6 einen Gehäuseinnenraum 13 , in dem ein Antriebskolben 14 in Achsrichtung der Längsachse 3 linear verschiebbar aufgenommen ist. Der Antriebskolben 14 liegt zweckmäßigerweise mit Dichtkontakt an der Innenfläche des Rohrabschnittes 4 und unterteilt den Gehäuseinnenraum 13 in eine der ersten Abschlusswand 5 zugewandte erste Arbeitskammer 15 und eine der zweiten Abschlusswand 6 zugewandte zweite Arbeitskammer 16.

In jede Arbeitskammer 15, 16 mündet ein eigener Steuerkanal 17, 18, der mit einer im Bereich der Außenfläche des Gehäuses 2 angeordneten Anschlussöffnung 17a, 18a verbunden ist. Vorzugsweise erstreckt sich der Steuerkanal 17, 18 ausschließlich durch die die zugeordnete Arbeitskammer 15, 16 begrenzende Abschlusswand 5, 6 hindurch. Über die Steuerkanäle 17, 18 können die beiden Arbeitskammern 15, 16 gesteuert mit Druckmedium beaufschlagt werden, um den Antriebskolben 14 zu bewegen und zu positionieren. Die Zufuhr und Abfuhr des Druckmediums kann mittels Fluidleitungen geschehen, die an die Anschlussöffnungen 17a, 18a lösbar anschließbar sind.

Die Bewegung des Antriebskolbens 14 lässt sich außerhalb des Gehäuses 2 an einer Kolbenstange 22 abgreifen, die mit dem Antriebskolben 14 bewegungsgekoppelt und insbesondere fest verbunden ist. Die Kolbenstange 22 erstreckt sich axial, also in Achsrichtung der Längsachse 3, wobei sie durch einen die erste Abschlusswand 5 axial durchsetzenden Gehäusedurchgang 23 hindurchtritt. Der außerhalb der ersten Abschlusswand 5 liegende Endabschnitt der Kolbenstange 22 kann eine Befestigungsschnittstelle 24 aufweisen, an der sich durch den Arbeitszylinder 1 zu bewegende Komponenten fixieren lassen, beispielsweise ein Teil einer Maschine.

Die Längsachse der Kolbenstange 22 fällt zweckmäßigerweise mit der Längsachse 3 des Gehäuses 2 zusammen.

Die zweite Abschlusswand 6 ist abgesehen von dem ihr zugeordneten Steuerkanal 18 als geschlossene Wand ohne Gehäusedurchgang ausgebildet. Allerdings könnte auch die zweite Abschlusswand 6 von einer zu der Kolbenstange 22 koaxialen weiteren Stange durchsetzt sein, wenn es für eine spezielle Anwendung gewünscht ist.

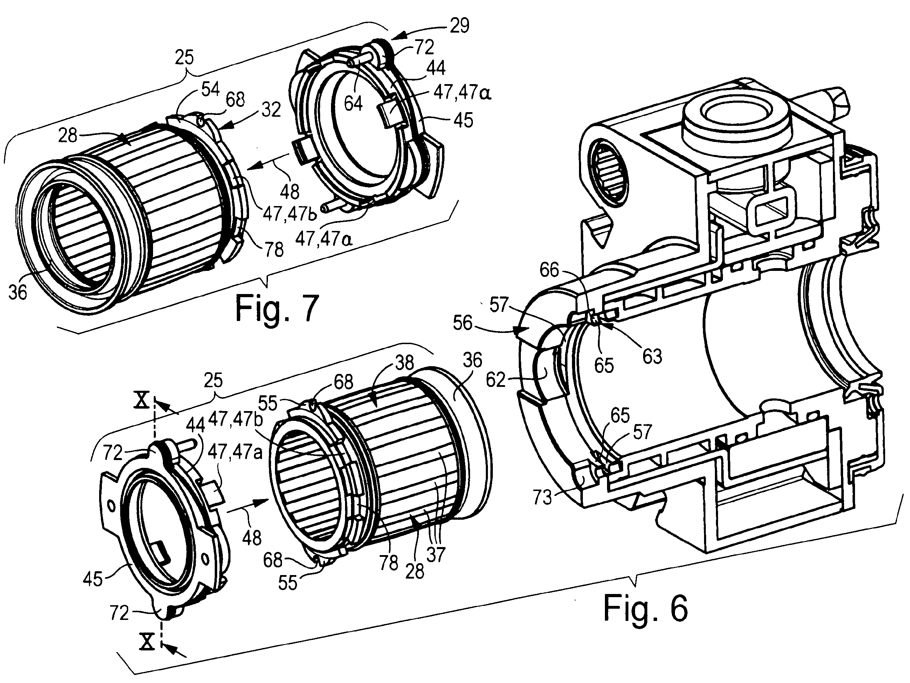

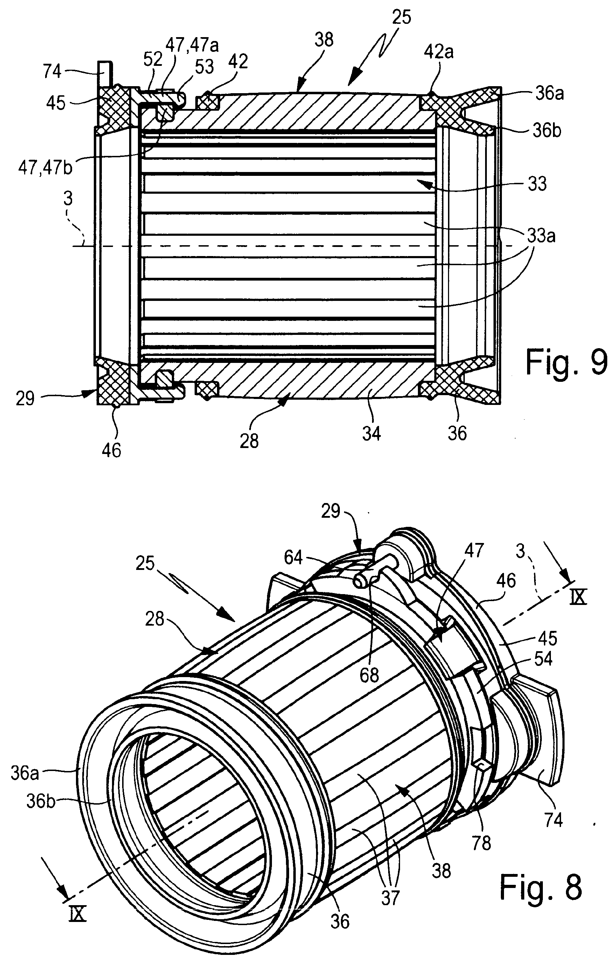

In dem Gehäusedurchgang 23 ist mit zumindest einem Teil seiner axialen Länge eine insgesamt hülsenförmige Baugruppe untergebracht, die im Folgenden als Lagerbaugruppe 25 bezeichnet sei und die einzeln auch nochmals in Figuren 8 und 9 sowie, in Explosionsdarstellung, in Figuren 6 und 7 abgebildet ist. Die Lagerbaugruppe 25 umschließt die Kolbenstange 22 koaxial und sitzt in einem zwischen der Innenumfangsfläche 26 des Gehäusedurchganges 23 und der Außenumfangsfläche 27 der Kolbenstange 22 ausgebildeten ringförmigen Zwischenraum, der daraus resultiert, dass der Außenquerschnitt der Kolbenstange 22 kleiner ist als der Querschnitt des Gehäusedurchganges 23.

Die Lagerbaugruppe 25 setzt sich beim Ausführungsbeispiel aus einer hülsenförmigen Lagerbuchse 28 und einem dazu koaxialen ringförmigen Abstreifer 29 zusammen. Wenn die Lagerbaugruppe 25 in der betriebsbereiten Arbeitsposition im Gehäuse 2 montiert ist, nimmt der Abstreif er 29 eine der Lagerbuchse vorne, also auf der axial vom Gehäuse 2 wegweisenden Seite vorgelagerte Position ein. Der Abstreifer 29 ist im Bereich der vorderen Stirnseite 32 der Lagerbuchse 28 lösbar an der Lagerbuchse 28 befestigt.

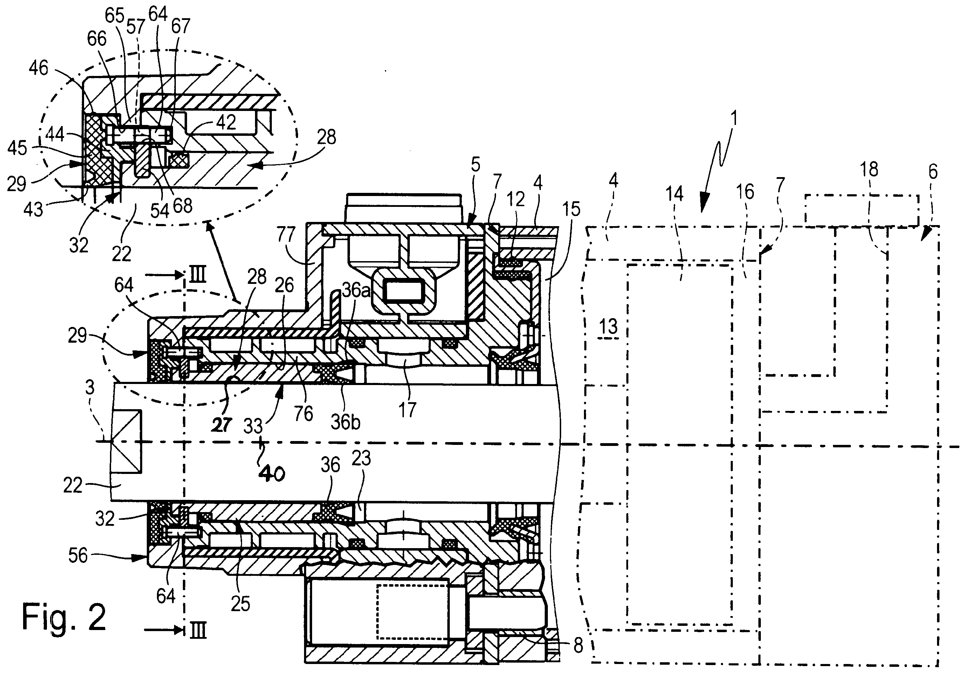

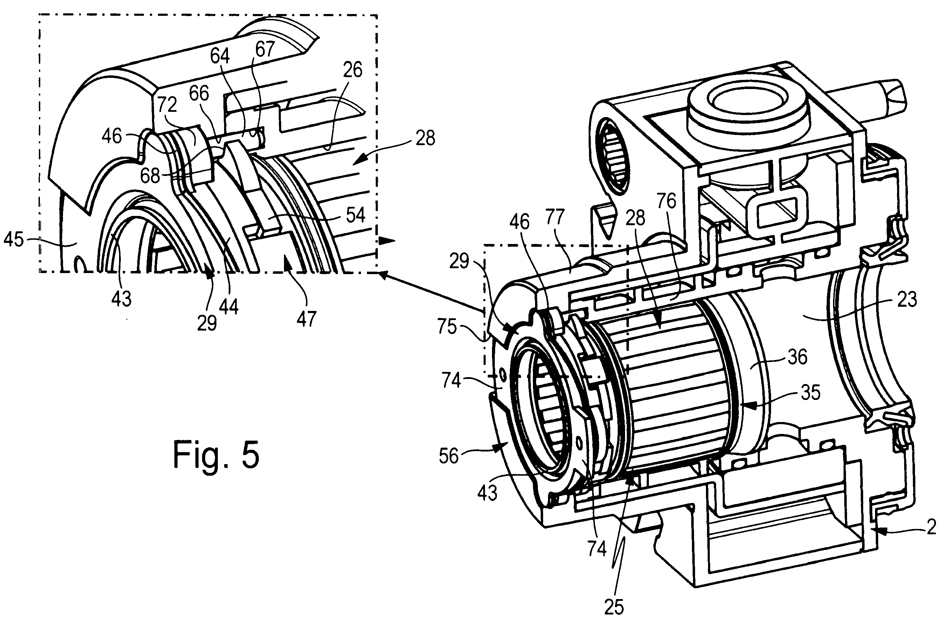

Die Figuren 2, 5, 8 und 9 geben den zu der Lagerbaugruppe 25 zusammengefügten Gebrauchszustand von Lagerbuchse 28 und Abstreifer 29 wieder. Die Figuren 6 und 7 zeigen die beiden Komponenten im voneinander gelösten Zustand.

Eine Besonderheit des Arbeitszylinders 1 besteht darin, dass die der lösbaren Verbindung zwischen Lagerbuchse 28 und Abstreifer 29 dienenden Befestigungsmaßnahmen so ausgeführt sind, dass sich der Abstreifer 29 von der Lagerbuchse 28 abnehmen und/oder vom Gehäuse 2 entfernen lässt, ohne an der Lagerbuchse 28 eine Manipulation vornehmen zu müssen. Diese kann bei diesem Demontagevorgang des Abstreifers 29 unverändert ihre auch während des Gebrauches in dem Gehäusedurchgang 23 eingenommene Arbeitsposition beibehalten. Gleiches gilt auch für eine anschließende neuerliche Montage des zuvor abgenommenen oder eines neuen Abstreifers 29. Bei dieser Montage wird ohne Veränderung der Arbeitsposition der Lagerbuchse 28 die lösbare Verbindung zwischen Abstreifer 29 und Lagerbuchse 28 wieder hergestellt.

Die Lagerbuchse 28 definiert an ihrem Innenumfang eine Lagerfläche 33, mit der sie die Kolbenstange 22 gleitverschieblich umfasst. Vorzugsweise verfügt die Lagerbuches 28 über einen insbesondere aus Kunststoffmaterial bestehenden hülsenförmigen Buchsenkörper 34, an dessen Innenumfang die Lagerfläche 33 ausgebildet ist. Die Lagerfläche 33 kann sich aus einer Vielzahl streifenförmiger Flächenabschnitte 33a zusammensetzen, die in der Umfangsrichtung des Buchsenkörpers 34 entlang dessen Innenumfang verteilt sind und sich an axial verlaufenden rippenförmigen Vorsprüngen befinden.

Die Lagerbuchse 28 des Ausführungsbeispiels verfügt außerdem über eine im Bereich ihrer dem Kolben 14 zugewandten rückwärtigen Stirnseite koaxial angeordnete ringförmige Dichtung 36. Die Dichtung 36 ist zweckmäßigerweise nach Art eines Lippendichtringes ausgebildet und verfügt über eine äußere und eine innere Dichtlippe 36a, 36b, die sich in Richtung zu der mit dem Gehäusedurchgang 23 fluidisch verbundenen ersten Arbeitskammer 15 erstrecken. Die äußere Dichtlippe 36a liegt statisch dichtend an der Innenumfangsfläche 26 des Gehäusedurchganges 23 an, die innere Dichtlippe 36b steht in Kontakt mit der Außenumfangsfläche 27 der Kolbenstange 22. Auf diese Weise ist ein Fluidaustritt aus der ersten Arbeitskammer 15 durch den Gehäusedurchgang 23 hindurch ausgeschlossen.

Die Dichtung 36 ist beim Ausführungsbeispiel stoffschlüssig an dem Buchsenkörper 34 fixiert. Sie kann insbesondere durch Spritzgießen angeformt sein. Um einen besonders guten Halt zu gewährleisten, erstrecken sich beim Ausführungsbeispiel ausgehend von der Dichtung 36 mehrere mit der Dichtung 36 einstückige Haltestreifen 37 in axialer Richtung entlang der Außenumfangsfläche 38 des Buchsenkörpers 34 und gehen in einen zu der ringförmigen Dichtung 36 koaxialen ringförmigen Halteabschnitt 42 über, der die Lagerbuchse 28 im Bereich ihrer vorderen Stirnseite 32 umschließt. Die Haltestreifen 37 und der Halteabschnitt 42 sind zweckmäßigerweise in nutartigen Vertiefungen des Buchsenkörpers 34 aufgenommen.

Durch den ringförmigen Halteabschnitt 42 und einen im Bereich der rückwärtigen Stirnseite 35 ausgebildeten weiteren ringförmigen Halteabschnitt 42a ist die Lagerbuchse 28 gummielastisch nachgiebig an der Innenumfangsfläche 26 abgestützt. In Verbindung damit, dass die Außenumfangsfläche 38 zweckmäßigerweise tonnenförmig ausgebaucht ist, ist die Lagerbuchse 28 in dem Gehäusedurchgang 23 bezüglich eines auf der Längsachse 3 liegenden Drehpunktes 40 kippbeweglich aufgenommen und kann sich optimal selbständig bezüglich der sie durchsetzenden Kolbenstange 22 ausrichten.

Die Dichtung 36 besteht zweckmäßigerweise aus einem Material mit gummielastischen Eigenschaften, ebenso wie die einstückig mit ihr verbundenen Haltestreifen 37, Halteabschnitt 42 und weiterer Halteabschnitt 42a.

Es ist auf jeden Fall vorteilhaft, wenn die Dichtung 36 ein Bestandteil der Lagerbuchse 28 ist. Hierzu kann die ringförmige Dichtung 36 alternativ auch kraft- und/oder formschlüssig an dem Buchsenkörper 34 fixiert sein. Prinzipiell wäre es jedoch auch denkbar, dass die Dichtung 36 nur lose an dem Buchsenkörper 34 anliegt oder gänzlich eigenständig fixiert ist.

Die ringförmige Dichtung 36 kann entfallen, wenn keine Abdichtung des Gehäusedurchganges 23 erforderlich ist. Dies ist beispielsweise der Fall, wenn der Arbeitszylinder von der einfachwirkenden Art ist, bei der nur die erste Arbeitskammer 15 mit Fluid beaufschlagt wird und die Rückstellung durch eine in der zweiten Arbeitskammer 16 angeordnete Feder bewirkt wird.

Es besteht außerdem die Möglichkeit, die ringförmige Dichtung 36 als bezüglich der Lagerbuchse 28 separates Bauteil auszubilden.

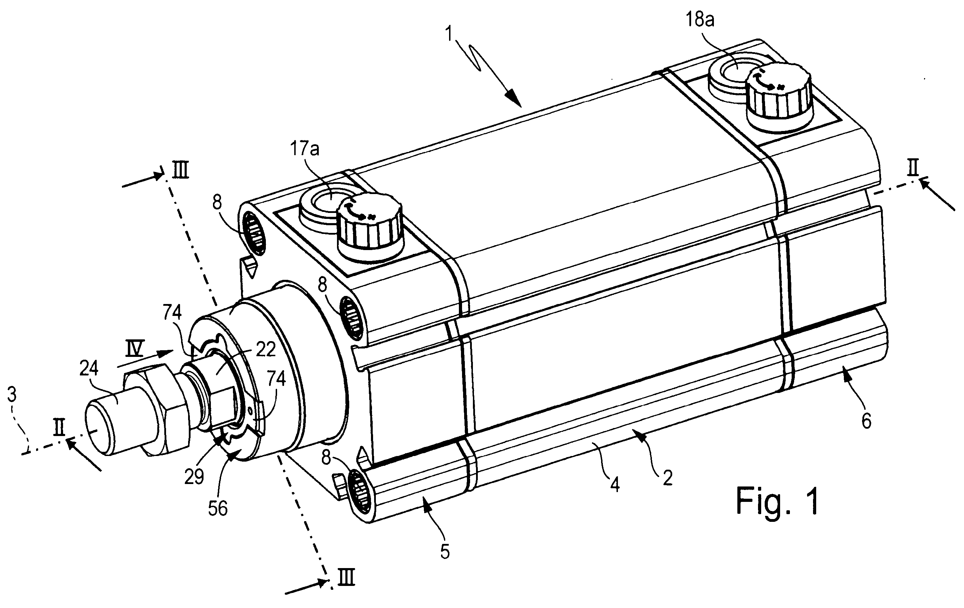

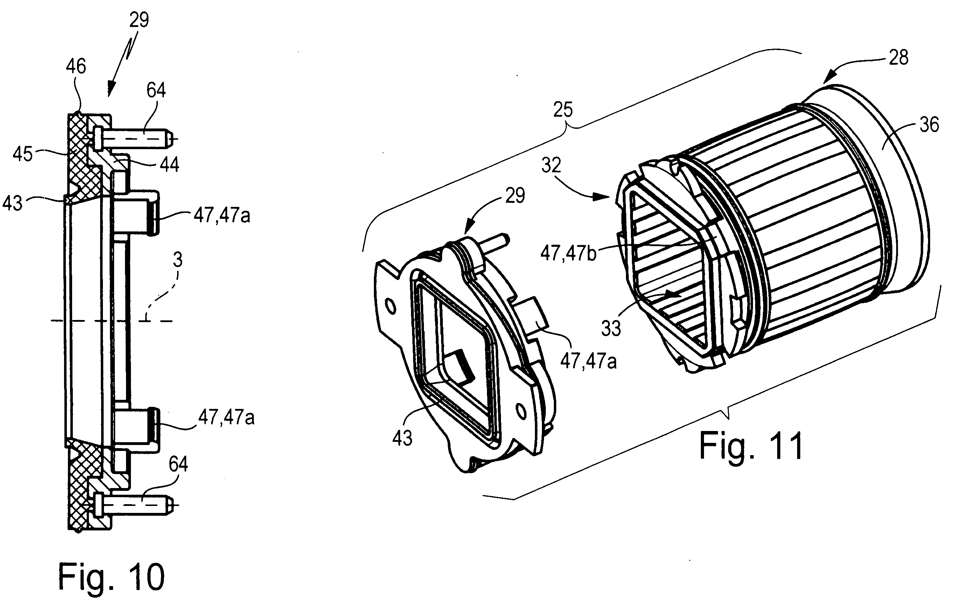

Die Lagerfläche 33 ist beim Ausführungsbeispiel der Figuren 1 bis 10 in Anpassung an eine entsprechende Außenkontur der Kolbenstange 22 kreiszylindrisch konturiert. Die Figur 11 macht deutlich, dass die Lagerbuchse 28 auch eine davon abweichende Innenkontur aufweisen kann, beispielsweise zur Definition einer prismatischen, im Querschnitt zweckmäßigerweise quadratischen Lagerfläche 33. Hier hat die Kolbenstange 22 dann einen entsprechend unkreisförmigen Querschnitt und ist insbesondere als Vierkant-Kolbenstange ausgebildet.

Der Abstreifer 29 verfügt über einen zu der Längsachse 3 konzentrischen Tragring 44, der unter anderem eine schräg nach radial innen und zugleich axial nach vorne ragende ringförmige Abstreiferlippe 43 trägt. Die Abstreiferlippe 43 liegt an der Außenumfangsfläche 27 der Kolbenstange 22 an und streift an dieser anhaftende Verunreinigungen ab, wenn die Kolbenstange 22 in das Gehäuse 2 einfährt. Der Tragring 44 besteht zweckmäßigerweise aus einem harten Kunststoffmaterial, das Material der Abstreiferlippe 43 wird den Einsatzbedingungen entsprechend gewählt. Sie kann beispielsweise aus einem Elastomermaterial, aus einem harten Kunststoffmaterial oder auch aus einem Metall bestehen. Man kann mehrere, sich in der Ausgestaltung ihrer Abstreiferlippe 43 voneinander unterscheidende Abstreifer 29 bereitstellen, die alternativ mit der Lagerbuchse 28 koppelbar sind.

Die anwendungsspezifische Ausbildung betrifft auch die von der Abstreiferlippe 43 umschlossene Querschnittskontur, die entsprechend derjenigen der Lagerfläche 33 kreisförmig (Figuren 1 bis 10) oder unkreisförmig (Figur 11) sein kann.

Wenn die Abstreiferlippe 43 aus einem Kunststoffmaterial besteht, ist sie zweckmäßigerweise stoffschlüssig an den Tragring 44 angeformt, beispielsweise durch Spritzgießen. Beim Ausführungsbeispiel ist dies der Fall, wobei hier die Abstreiferlippe 43 Bestandteil eines an den Tragring 44 konzentrisch angeformten Elastomerringkörpers 45 ist. Der Elastomerringkörper 45 bildet zweckmäßigerweise eine sich in der Umfangsrichtung um den Außenumfang des Abstreifers 29 herum erstreckende, bevorzugt wulstförmig ausgebildete Abdichtkontur 46, die an der Innenumfangsfläche 26 des Gehäusedurchganges 23 staubdicht anliegt und ein Eindringen von Verunreinigungen in den Bereich der Lagerbuchse 28 verhindert. In diesem Zusammenhang ist aus der Zeichnung ersichtlich, dass der Abstreifer 29 zweckmäßigerweise zumindest ein Stück weit axial in den Gehäusedurchgang 23 eintaucht.

Der Abstreifer 29 ist auf die Lagerbuchse 28 zweckmäßigerweise axial aufgesteckt und durch Rastverbindungsmittel 47 lösbar an der Lagerbuchse 28 befestigt. Bevorzugt bestehen die Rastverbindungsmittel 47 aus mehreren an dem Abstreifer 29 angeordneten, rückseitig von dem Abstreifer 29 in Richtung zur Lagerbuchse 28 axial wegragenden Rasthaken 47a und aus einer entsprechenden Anzahl von damit kooperierenden, von den Rasthaken 47a hintergreifbaren Rastkanten 47b an der Lagerbuchse 28. Diese Anordnung kann auch vertauscht sein.

Die Rasthaken 47a und Rastkanten 47b sind zweckmäßigerweise mehrfach vorhanden und in geeigneter Verteilung um die Längsachse 3 herum an der jeweiligen Komponente 29, 28 angeordnet. Wird der Abstreifer 29 in einer mit der Achsrichtung der Längsachse 3 zusammenfallenden Ansteckrichtung 48 an die vordere Stirnseite 32 der Lagerbuchse 28 angesteckt, schnappen die Rasthaken 47a hinter die Rastkanten 47b und sorgen für den für den Gebrauch erwünschten axialen Zusammenhalt der Lagerbaugruppe 25.

Die Rastverbindungsmittel 47 des Abstreifers 29 sind zweckmäßigerweise einstückig an dem Tragring 44 angeordnet. Aus Figur 9 ist gut ersichtlich, dass die Rasthaken 47a zweckmäßigerweise aus an den Tragring 44 angeformten, federelastisch biegbaren Tragarmen 52 bestehen, an deren Endbereichen ein radial nach innen vorstehender Rastvorsprung 53 angeformt ist, der im verrasteten Zustand die zugeordnete Rastkante 47b rückseitig hintergreift.

An der im verrasteten Zustand der Rastkante 47b zugewandten Seite ist der Rastvorsprung 53 zweckmäßigerweise derart abgeschrägt, dass er selbsttätig außer Eingriff mit der zugeordneten Rastkante 47b gelangt, wenn auf den Abstreifer 29 eine entgegen der Aufsteckrichtung 48 orientierte Zugkraft einer vorbestimmten Höhe aufgebracht wird. Diese zum Lösen der Verbindung erforderliche Zugkraft ist größer als die entsprechend orientierte Kraft, die die Kolbenstange aufgrund der Reibung auf den Abstreifer 29 ausübt. Mithin ist während des Betriebes des Arbeitszylinders 1 ein fester Zusammenhalt zwischen Abstreifer 29 und Lagerbuchse 28 gewährleistet, der sich aber allein durch Aufbringen einer externen höheren Zugkraft auf den Abstreif er 29 aufheben lässt, um die Lagerbaugruppe 25 zu trennen.

Beim Ausführungsbeispiel enthalten die Rastverbindungsmittel 47 vier Paare miteinander kooperierender Rasthaken 47a und Rastkanten 47b.

Die zweckmäßigerweise von Rastkanten 47b gebildeten Rastverbindungsmittel 47 der Lagerbuchse 28 sind zweckmäßigerweise von einem Metallring 54 gebildet, der an dem Buchsenkörper 34 befestigt ist. Bei der Herstellung der Lagerbuchse 28 kann der Metallring 54 von dem den Buchsenkörper 34 bildenden Kunststoffmaterial umspritzt werden. Zweckmäßigerweise ist der Metallring 54 mit seinem radial innen liegenden Umfangsabschnitt in den Außenumfang des Buchsenkörpers 34 eingebettet und steht ringsum radial über den Außenumfang des Buchsenkörpers 34 vor.

Vorzugsweise befinden sich die Rastkanten 47b im Bereich von Aussparungen des Metallringes 54, in die die Rasthaken 47a mit ihren Tragarmen 52 eingreifen können.

Die Befestigung der Lagerbaugruppe 25 im Gehäusedurchgang 23 ist zweckmäßigerweise zwischen der Lagerbuchse 28 und dem Abstreifer 29 funktionell aufgeteilt. Die Lagerbuchse 28 wird durch einen Steck-Dreh-Vorgang in ihre Arbeitsposition verbracht, in der sie durch Zusammenwirken mit dem Gehäuse 2 axial unbeweglich fixiert ist, ohne dass der Abstreifer 29 an der bezüglich dem Gehäuse 2 stattfindenden axialen Abstützung irgendeinen Anteil hätte. Die Befestigungsfunktion des Abstreifers 29 besteht darin, die Lagerbuchse 28 innerhalb des Gehäusedurchganges 23 unverdrehbar zu fixieren, so dass es unmöglich ist, die Lagerbuchse 28 aus der axial unbeweglich mit dem Gehäuse verriegelten Arbeitsposition in eine entriegelte, das Herausziehen aus dem Gehäusedurchgang 23 ermöglichende Freigabeposition zu verdrehen. Diese Drehbewegung, bei der die Längsachse 3 als Drehachse fungiert, ist möglich, wenn der Abstreifer 29 nicht an der Lagerbuchse 28 befestigt ist. Die Montage und Demontage von Abstreifer 29 und Lagerbuchse 28 kann nur unabhängig voneinander erfolgen.

Zur bezüglich dem Gehäuse 2 axial unbeweglichen Fixierung der Lagerbuchse 28 ist selbige im Bereich ihres Außenumfanges mit zwei sich bezüglich der Längsachse der Lagerbuchse 28 diametral gegenüberliegenden, nach radial außen abstehenden Befestigungsvorsprüngen 55 versehen. Eine größere oder kleinere Anzahl wie auch eine andere Verteilung von Befestigungsvorsprüngen 55 wäre ebenfalls möglich. Die Befestigungsvorsprünge 55 sind zweckmäßigerweise einstückiger Bestandteil des Metallringes 54, von dem sie insbesondere ohrenartig abstehen. Die Außenkontur der Befestigungsvorsprünge 55 ist insbesondere konvex.

Mit axialem Abstand zu der die äußere Mündungsöffnung des Gehäusedurchganges 23 umrahmenden vorderen Stirnfläche 56 des Gehäuses 2 weist die Innenumfangsfläche 26 des Gehäusedurchganges 23 eine der Anzahl der Befestigungsvorsprünge 55 entsprechende Anzahl nutartiger Haltevertiefungen 57 auf. Diese Haltevertiefungen 57 liegen, wie die Befestigungsvorsprünge 55, untereinander axial auf gleicher Höhe. Wären die Befestigungsvorsprünge 55 axial versetzt, würde das gleiche auch für die nutartigen Haltevertiefungen 57 gelten.

Jede Haltevertiefung 57 erstreckt sich in Umfangsrichtung über einen Bruchteil der Innenumfangsfläche 26. Exemplarisch beträgt die Umfangserstreckung jeweils etwa 90°. Die in Achsrichtung der Längsachse 3 gemessene Breite der Haltevertiefung 57 entspricht derjenigen der Befestigungsvorsprünge 55, so das selbige in der Lage sind, in die Haltevertiefungen 57, in axialer Richtung möglichst spielfrei, einzugreifen.

Jede Haltevertiefung 57 ist an einer Stelle, insbesondere an einem ersten Endabschnitt 58, zu der vorderen Stirnfläche 56 hin offen. Hierzu weist die Innenumfangsfläche 26 pro Haltevertiefung 57 eine sich in Achsrichtung der Längsachse 3 erstreckende Montageausnehmung 62 auf, die axial innen in den ersten Endabschnitt 58 der zugeordneten Haltevertiefung 57 und axial außen zu der vorderen Stirnfläche 56 ausmündet. Die Querschnittskontur der Montageausnehmung 62 entspricht beim Ausführungsbeispiel derjenigen der Befestigungsvorsprünge 55.

Die sich in Umfangsrichtung des Gehäusedurchganges 23 an die Montageausnehmung 62 anschließende, nach axial innen orientierte Flanke einer jeweiligen Haltevertiefung 57 bildet eine Abstützfläche 63. Diese erstreckt sich bis zu dem dem ersten Endabschnitt 58 entgegengesetzten zweiten Endabschnitt 59 der zugehörigen Haltevertiefung 57.

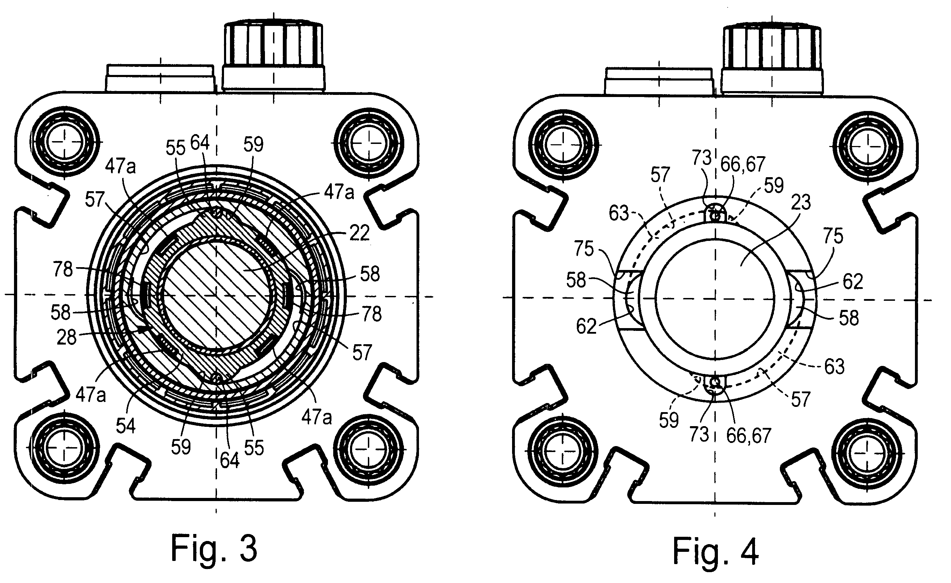

Um die Lagerbuchse 28 zu montieren, wird sie winkelmäßig so ausgerichtet, dass ihre Befestigungsvorsprünge 55 mit den Montageausnehmungen 62 fluchten. In dieser Position wird die Lagerbuchse 28 axial im Rahmen einer reinen Linearbewegung in den Gehäusedurchgang 23 eingesteckt, bis die Befestigungsvorsprünge 55 in den ersten Endabschnitt 58 der Haltevertiefungen 57 eingetreten sind. Das weitere Einstecken wird durch Anschlagmittel verhindert, die zweckmäßigerweise von der der Abstützfläche 63 gegenüberliegenden rückwärtigen Flanke der Haltevertiefungen 57 gebildet sind. Die auf diese Weise erreichte Position ist eine Zwischenposition, bei der es sich um die weiter oben beschriebene Freigabeposition handelt. Ausgehend von dieser Zwischenposition wird die Lagerbuchse 28 verdreht, wobei die Befestigungsvorsprünge 55 in den Haltevertiefungen 57 entlang wandern, bis sie den zweiten Endabschnitt 59 erreicht haben (aus Figur 3 ersichtlich) . Diese Endposition der Drehbewegung ist die schon erwähnte Arbeitsposition. Da die Befestigungsvorsprünge 55 hierbei die ihnen axial vorgelagerten Abstützflächen 63 hintergreifen, ist die Lagerbuchse 28 an einem Herausziehen aus dem Gehäusedurchgang 23 gesichert. Gleichzeitig fungieren die rückseitigen Flanken der Haltevertiefungen als Anschlagmittel, die die Einstecktiefe der Lagerbuchse 28 begrenzen. Letztere ist somit durch den Eingriff der Befestigungsvorsprünge 55 in die nutartigen Haltevertiefungen 57 axial unbeweglich verriegelt. Die hierbei eingenommene Position der Befestigungsvorsprünge 55 kann als Verriegelungsposition bezeichnet werden.

Anschließend wird der Abstreifer 29 montiert. Dies geschieht durch einfaches Einstecken des Abstreifers 29 in den Gehäusedurchgang 23, bis die Rastverbindungsmittel 47 miteinander in Eingriff gelangt sind. Aufgrund der bezüglich dem Gehäuse 2 axial unbeweglichen Fixierung der Lagerbuchse 28 ist folglich auch der Abstreifer 29 axial unbeweglich fixiert.

Damit die Lagerbuchse 28 sich während des Betriebes der Arbeitszylinders 1 nicht in die Zwischenposition bzw. Freigabeposition zurückdreht, sind zweckmäßigerweise Maßnahmen vorgesehen, die eine Verdrehsicherung der Lagerbuchse 28 in der Arbeitsposition bewirken. Diese Verdrehsicherungsmaßnahmen können beispielsweise schon allein durch das kraftschlüssige Zusammenwirken der Halteabschnite 42, 42a mit der Innenumfangsfläche 26 erzielt werden. Eine erhöhte Sicherheit gegen unbeabsichtigtes Verdrehen erreicht man allerdings durch zusätzliche oder alternative Verriegelungsmaßnahmen. Diese sind vor allem dann zweckmäßig, wenn die Kolbenstange 3 aufgrund eines unkreisförmigen Querschnittes während des Betriebes des Arbeitszylinders 1 ein Drehmoment auf die Lagerbuchse 28 ausüben kann. Dies trifft beispielsweise für eine Lagerbaugruppe gemäß Figur 11 zu.

In vorteilhafter Weise erfolgt die vorgenannte Verdrehsicherung der Lagerbuchse 28 beim Ausführungsbeispiel durch den Abstreifer 29. Dies geschieht dadurch, dass zum einen die Lagerbuchse 28 bezüglich dem Abstreifer 29 unverdrehbar verriegelt ist und zum anderen der Abstreifer 29 seinerseits bezüglich dem Gehäuse 2 unverdrehbar verriegelt ist. Man erspart sich somit die Handhabung zusätzlicher Verdrehsicherungsmittel.

Der Abstreifer 29 verfügt zur unverdrehbaren Verriegelung bezüglich dem Gehäuse 2 zwei axial in Richtung zur Lagerbuchse 28 ragende, bevorzugt stiftförmig ausgebildete Verriegelungsvorsprünge 64. Sie liegen sich zweckmäßigerweise bezüglich der Längsachse 3 diametral gegenüber. Eine größere oder kleinere Anzahl von Verriegelvorsprüngen 64 wäre ebenfalls möglich. Die vorzugsweise aus Metall bestehenden Verriegelungsvorsprünge 64 sind zweckmäßigerweise in dem Tragring 44 verankert, was vorzugsweise unmittelbar bei der Spritzgießherstellung des Abstreifers 29 geschieht.

Der Gehäusedurchgang 23 ist im Bereich seines Innenumfanges abgestuft und weist mindestens einen nach innen ragenden Radialvorsprung 65 auf, in dem pro Verriegelungsvorsprung 64 eine axial nach außen hin offene erste Verriegelungsausnehmung 66 ausgebildet ist. Jede erste Verriegelungsausnehmung 66 fluchtet axial mit einem Verriegelungsvorsprung 64, so dass die Verriegelungsvorsprünge 65 in die ersten Verriegelungsausnehmungen 66 eintauchen, wenn der Abstreifer 29 an die in der Arbeitsposition befindliche Lagerbuchse 28 angesteckt wird. Somit kann der Abstreifer 29 nicht mehr um die Längsachse 3 verdreht werden.

Exemplarisch bildet der Radialvorsprung 65 die vordere Begrenzungswand der beiden nutartigen Haltevertiefungen 57 und ist von der ersten Verriegelungsausnehmung 66 axial durchsetzt. Weiterhin liegt jeder ersten Verriegelungsausnehmung 66 zweckmäßigerweise eine in der rückseitigen Flanke der zugeordneten Haltevertiefung 57 ausgebildete zweite Verriegelungsausnehmung 67 axial gegenüber. Die Verriegelungsvorsprünge 64 haben nun eine derartige Länge, dass sie die erste Verriegelungsausnehmung 66 durchsetzen, die sich anschließende Haltevertiefung 57 durchqueren und schließlich in die zweite Verriegelungsausnehmung 67 eintauchen. Auf diese Weise ergibt sich eine besonders stabile Querabstützung der Verriegelungsvorsprünge 64, die auch hohen Drehmomenten standhält.

Ein besonderer Vorteil des Ausführungsbeispiels liegt darin, dass die für die Verdrehsicherung des Abstreifers 29 zuständigen Verriegelungsvorsprünge 64 auch zugleich die Verdrehsicherung zwischen Abstreifer 29 und Lagerbuchse 28 bewirken. Hierzu ist an der Lagerbuchse 28 für jeden Verriegelungsvorsprung 64 eine dritte Verriegelungsausnehmung 68 vorhanden, die mit den ersten und zweiten Verriegelungsausnehmungen 66, 67 axial fluchtet. Zweckmäßigerweise ist die dritte Verriegelungsausnehmung 68 an jeweils einem der Befestigungsvorsprünge 55 ausgebildet, insbesondere in Gestalt einer randseitigen Aussparung. Der Verriegelungsvorsprung 64 greift mit seinem die Haltevertiefung 57 durchsetzenden Längenabschnitt nach Art eines Riegels in die zugeordnete dritte Verriegelungsausnehmung 68 ein.

Die Verriegelungsvorsprünge 64 können wie abgebildet an jeweils einem von dem Tragring 44 nach radial außen abstehenden Tragvorsprung 72 angeordnet sein. Zur Aufnahme dieser Tragvorsprünge 72 bei montiertem Abstreifer 29 ist in der Innenumfangsfläche 26 des Gehäusedurchganges 23 je eine zur vorderen Stirnfläche 56 ausmündende Aufnahmeaussparung 73 ausgebildet.

Ein Vergleich der Figuren 3 und 4 macht deutlich, dass die axial miteinander fluchtenden ersten und zweiten Verriegelungsausnehmungen 66, 67 jeweils im Bereich des zweiten End-abschnitts 59 der Haltevertiefungen 57 angeordnet sind, in einem Bereich also, in dem die Befestigungsvorsprünge 55 angeordnet ist, wenn die Lagerbuchse 28 die Arbeitsposition einnimmt.

Der Abstreifer 29 kann sehr leicht manuell, gegebenenfalls mit Hilfe eines Hebelwerkzeuges, von der Lagerbuchse 28 abgelöst werden. Um diesen Entnahmevorgang zu erleichtern, kann der Elastomerringkörper 45 eine oder mehrere, beim Ausführungsbeispiel zwei radial abstehende Entnahmelaschen 74 aufweisen. Da diese Entnahmelaschen 74 flexibel sind, lassen sie sich leicht umbiegen und mit zwei Fingern einer Hand erfassen, um anschließend den Abstreifer 29 herauszuziehen.

Wenn die Entnahmelaschen 74 vor die vordere Stirnfläche 56 ragen, kann zwischen ihnen und der Stirnfläche 56 bei Bedarf auch ein das Abziehen erleichterndes Hebelwerkzeug angesetzt werden.

Die Entnahmelaschen 74 sind zweckmäßigerweise axial versenkt in stirnseitigen, radial innen zu dem Gehäusedurchgang 23 ausmündenden Aussparungen 75 aufgenommen.

Mit Umfangsversatz zu den Rastkanten 47b sind an dem Metallring 54 noch mehrere Entnahmeaussparungen 78 ausgebildet, an denen sich bei zuvor entferntem Abstreifer 29 von axial außen her ein Hakenwerkzeug ansetzen lässt, das den Metallring 54 hintergreift, um die in die Zwischenstellung verdrehte Lagerbuchse 28 aus dem Gehäusedurchgang 23 herauszuziehen. Diese Maßnahme ermöglicht einen leichten verschleißbedingten Austausch der Lagerbuchse 28.

Wie man insbesondere den Figuren 2, 5 und 6 entnehmen kann, verfügt die erste Abschlusswand 5 beim Ausführungsbeispiel über einen sich aus mehreren Wandelementen zusammensetzenden mehrteiligen Aufbau. Ein Großteil der axialen Länge des Gehäusedurchganges 23 ist von einem rohrförmigen Innenteil 76 gebildet, auf das ein haubenförmiges, die Außenkontur der ersten Abschlusswand 5 definierendes Aussenteil 77 axial aufgesteckt ist. Dieser Aufbau erleichtert die Ausbildung radialer Vertiefungen in dem Gehäusedurchgang 23. Beim Ausführungsbeispiel bildet das Außenteil 77 den Radialvorsprung 65, der in den dem Innenteil 76 axial vorgelagerten Bereich ragt und auf diese Weise gemeinsam mit dem Innenteil 76 die beiden nutartigen Haltevertiefungen 57 bildet. Eine radiale Fügeebene von Innenteil 76 und Außenteil 77 läuft also durch die Haltevertiefungen 57 hindurch. Diese Maßnahme vereinfacht die Herstellung hinterschnittener Konturen. Gleichwohl sind die erfindungsgemäßen Maßnahmen auch bei konventionell, insbesondere aus Vollmaterial ausgebildeten Abschlusswänden realisierbar.

## Patentansprüche

1. Fluidbetätigter Arbeitszylinder, mit einem Gehäuse (2), das wenigstens einen den Durchtritt einer Kolbenstange (22) ermöglichenden Gehäusedurchgang (23) aufweist, in dem eine Lagerbuchse (28) unter Einnahme einer Arbeitsposition aufgenommen ist, an der im Bereich ihrer vom Gehäuse (2) wegweisenden vorderen Stirnseite (32) ein ringförmiger Abstreifer (29) fixiert ist, wobei der Abstreifer (29) derart lösbar an der Lagerbuchse (28) befestigt ist, dass er bei in der Arbeitsposition verbleibender Lagerbuchse (28) von dieser und dem Gehäuse (2) abnehmbar ist, **dadurch gekennzeichnet, dass** die Lagerbuchse (28) durch Verdrehen um ihre Längsachse in die Arbeitsposition und aus der Arbeitsposition bewegbar ist, wobei sie in der Arbeitsposition durch den an ihr befestigten Abstreifer (29) bezüglich dem Gehäuse (2) verdrehgesichert ist.

2. Arbeitszylinder nach Anspruch 1, **dadurch gekennzeichnet, dass** der Abstreifer (29) durch Rastverbindungsmittel (47) lösbar an der Lagerbuchse (28) befestigt ist, wobei die Rastverbindungsmittel (47) zweckmäßigerweise mindestens einen an der einen Komponente angeordneten Rasthaken (47a) und eine damit kooperierende, an der anderen Komponente angeordnete Rastkante (47b) aufweisen.

3. Arbeitszylinder nach Anspruch 1 oder 2, **dadurch gekennzeichnet, dass** die Lagerbuchse (28) in ihrer Arbeitsposition ohne Mitwirkung des Abstreifers (29) axial unbeweglich bezüglich dem Gehäuse (2) fixiert ist.

4. Arbeitszylinder nach einem der Ansprüche 1 bis 3, **dadurch gekennzeichnet, dass** die Lagerbuchse (28) mindestens einen radial nach außen abstehenden Befestigungsvorsprung (55) aufweist, der in der Arbeitsposition zur axialen Verriegelung der Lagerbuchse (28) eine ihm axial vorgelagerte, fest mit dem Gehäuse (2) verbundene Abstützfläche (63) hintergreift, die zweckmäßigerweise von der Flanke einer am Innenumfang des Gehäusedurchganges (23) ausgebildeten nutartigen Haltevertiefung (57) gebildet ist.

5. Arbeitszylinder nach Anspruch 4, **dadurch gekennzeichnet, dass** der mindestens eine Befestigungsvorsprung (55) Bestandteil eines Metallringes (54) ist, der an einem aus Kunststoffmaterial bestehenden Buchsenkörper (34) der Lagerbuchse (28) befestigt ist.

6. Arbeitszylinder nach einem der Ansprüche 1 bis 5, **dadurch gekennzeichnet, dass** die Lagerbuchse (28) mittels eines Steck-Dreh-Vorganges in die Arbeitsposition verbringbar ist, wobei der mindestens eine Befestigungsvorsprung (55) beim axialen Einstecken der Lagerbuchse (28) in eine axial tiefer als die Abstützfläche (63) in dem Gehäusedurchgang (23) liegende Zwischenposition gelangt, aus der er beim anschließenden Verdrehen der Lagerbuchse (28) in eine die Abstützfläche (63) hintergreifende Verriegelungsposition gelangt.

7. Arbeitszylinder nach einem der Ansprüche 1 bis 6, **dadurch gekennzeichnet, dass** die Lagerbuchse (28) in der Arbeitsposition bezüglich dem Gehäuse (2) verdrehgesichert ist, zweckmäßigerweise dadurch, dass der Abstreifer (29) bezüglich dem Gehäuse (2) unverdrehbar verriegelt ist und die Lagerbuchse (28) bezüglich dem Abstreifer (29) unverdrehbar verriegelt ist.

8. Arbeitszylinder nach Anspruch 7, **dadurch gekennzeichnet, dass** der Abstreifer (29) mindestens einen axial in Richtung zur Lagerbuchse (28) ragenden, zweckmäßigerweise stiftförmigen Verriegelungsvorsprung (64) aufweist, der sowohl in mindestens eine am Gehäuse (2) angeordnete Verriegelungsausnehmung (66, 67) als auch in mindestens eine axial fluchtend hierzu angeordnete, an der Lagerbuchse (28) ausgebildete Verriegelungsausnehmung (68) eingreift.

9. Arbeitszylinder nach Anspruch 8, **dadurch gekennzeichnet, dass** der mindestens eine Verriegelungsvorsprung (64) an einem radial nach außen vom Abstreifer (29) wegragenden Tragvorsprung (72) angeordnet ist.

10. Arbeitszylinder nach einem der Ansprüche 1 bis 9, **dadurch gekennzeichnet, dass** der Abstreifer (29) stirnseitig in den Gehäusedurchgang (23) eintaucht, wobei er zweckmäßigerweise eine sich um seinen Außenumfang herum erstreckende Abdichtkontur (46) aufweist, die dichtend am Innenumfang des Gehäusedurchganges (23) anliegt.

11. Arbeitszylinder nach einem der Ansprüche 1 bis 10, **dadurch gekennzeichnet, dass** von dem Abstreifer (29) mindestens eine Entnahmelasche (74) nach radial außen wegragt, die zur Einleitung einer den Abstreifer (29) von der Lagerbuchse (28) lösenden Entnahmekraft dient und die zweckmäßigerweise elastisch biegbar ausgebildet ist.

12. Arbeitszylinder nach einem der Ansprüche 1 bis 11, **dadurch gekennzeichnet, dass** der von der Lagerbuchse (28) und von dem Abstreifer (29) umschlossene Querschnitt entsprechend der Außenkontur der Kolbenstange (22) kreisförmig oder unkreisförmig ausgebildet ist.

13. Arbeitszylinder nach einem der Ansprüche 1 bis 12, **dadurch gekennzeichnet, dass** an der dem Abstreifer (29) entgegengesetzten Rückseite der Lagerbuchse (28) eine ringförmige Dichtung (36) angeordnet und insbesondere unlösbar befestigt ist.

14. Arbeitszylinder nach einem der Ansprüche 1 bis 13, **dadurch gekennzeichnet, dass** der Gehäusedurchgang (23) in einer nach Art eines Deckels an einem Rohrabschnitt (4) des Gehäuses (2) befestigten Abschlusswand (5) ausgebildet ist, die zweckmäßigerweise ein Innenteil (76) und ein auf das Innenteil (76) axial aufgestecktes Außenteil (77) aufweist, wobei das Innenteil (76) gemeinsam mit dem Außenteil (77) mindestens eine zur Fixierung der Lagerbuchse (28) genutzte nutartige Haltevertiefung (57) definiert.

## Claims

1. Fluid-actuated operating cylinder, comprising a housing (2) having at least one housing passageway (23), which permits the passage of a piston rod (22) and in which a bearing bush (28) adopting an operating position is accommodated, to which bearing bush (28) is secured an annular wiper (29) in the region of its front end face (32) facing away from the housing (2), the wiper (29) being releasably secured to the bearing bush (28) in such a way that it can be removed therefrom and from the housing (2) while the bearing bush (28) remains in the operating position, **characterised in that** the bearing bush (28) can be moved into and out of the operating position by rotating about its longitudinal axis, being secured against rotation relative to the housing (2) by the wiper (29) secured to it in the operating position.

2. Operating cylinder according to claim 1, **characterised in that** the wiper (29) is releasably secured to the bearing bush (28) by latching means (47), the latching means (47) expediently comprising at least one latching hook (47a) assigned to the one component and a cooperating latching edge (47b) located on the other component.

3. Operating cylinder according to claim 1 or 2, **characterised in that** the bearing bush (28) is located axially immovably relative to the housing (2) in its operating position without the involvement of the wiper (29).

4. Operating cylinder according to any of claims 1 to 3, **characterised in that** the bearing bush (28) comprises at least one mounting projection (55), which projects radially outwards and in the operating position engages, for the axial locking of the bearing bush (28), a support surface (63) from behind, which support surface (63) is positioned axially in front and permanently joined to the housing (2), and which is expediently represented by the flank of a groove-type retaining recess (57) formed on the inner circumference of the housing passageway (23).

5. Operating cylinder according to claim 4, **characterised in that** the at least one mounting projection (55) is a part of a metal ring (54), which is secured to a bush body (34) made of a plastic material of the bearing bush (28).

6. Operating cylinder according to any of claims 1 to 5, **characterised in that** the bearing bush (28) can be brought into the operating position by means of a plug-and-twist action, wherein the at least one mounting projection (55), while the bearing bush (28) is being axially inserted, arrives at an intermediate position which is axially deeper than the support surface (63) in the housing passageway (23) and from where, while the bearing bush (28) is then being twisted, it arrives at a locking position engaging the support surface (63) from behind.

7. Operating cylinder according to any of claims 1 to 6, **characterised in that** the bearing bush (28) is secured against rotation relative to the housing (2) in the operating position, expediently by providing that the wiper (29) is non-rotatably locked relative to the housing (2) and the bearing bush (28) is non-rotatably locked relative to the wiper (29).

8. Operating cylinder according to claim 7, **characterised in that** the wiper (29) has at least one, expediently pin-shaped, locking projection (64), which projects axially towards the bearing bush (28) and engages both with at least one locking recess (66, 67) on the housing and with at least one axially aligned locking recess (68) formed on the bearing bush (28).

9. Operating cylinder according to claim 8, **characterised in that** the at least one locking projection (64) is located on a support projection (72) projecting radially outwards from the wiper (29).

10. Operating cylinder according to any of claims 1 to 9, **characterised in that** the wiper (29) dips into the housing passageway (23) at the front face, expediently having a sealing contour (46) extending along its outer circumference and bearing against the inner circumference of the housing passageway (23) to form a seal.

11. Operating cylinder according to any of claims 1 to 10, **characterised in that** at least one removal tab (74), which serves to introduce a removal force releasing the wiper (29) from the bearing bush (28) and which is expediently elastically flexible, projects from the wiper (29).

12. Operating cylinder according to any of claims 1 to 11, **characterised in that** the cross-section enclosed by the bearing bush (28) and the wiper (29) is designed to be circular or non-circular to match the external contour of the piston rod (22).

13. Operating cylinder according to any of claims 1 to 12, **characterised in that** an annular seal (36) is located on and in particular permanently secured to the rear side of the bearing bush (28) opposite the wiper (29).

14. Operating cylinder according to any of claims 1 to 13, **characterised in that** the housing passageway (23) is formed in an end wall (5), which is secured in the manner of a cover to a tubular section (4) of the housing (2) and which expediently comprises an inner part (76) and an outer part (77) coaxially plugged onto the inner part (76), the inner part (76) together with the outer part (77) defining at least one groove-type retaining recess (57) for the location of the bearing bush (28).

## Revendications

1. Vérin de travail actionné par fluide, avec un boîtier (2) qui présente au moins un passage de boîtier (23) permettant le passage d'une tige de piston (22), dans lequel un coussinet (28) est logé en occupant une position de travail, sur laquelle une racle annulaire (29) est fixée dans la zone de son côté frontal avant (32) dirigé loin du boîtier (2), la racle (29) étant fixée de manière amovible sur le coussinet (28) de telle manière qu'elle soit retirable de celui-ci et du boîtier (2) lorsque le coussinet (28) reste dans la position de travail, **caractérisé en ce que** le coussinet (28) est mobile par rotation autour de son axe longitudinal dans la position de travail et hors de la position de travail, celui-ci étant bloqué en rotation dans la position de travail par la racle (29) fixée sur celui-ci par rapport au boîtier (2).

2. Vérin de travail selon la revendication 1, **caractérisé en ce que** la racle (29) est fixée de manière amovible par des moyens de liaison par encliquetage (47) sur le coussinet (28), les moyens de liaison par encliquetage (47) présentant de manière appropriée au moins un crochet d'encliquetage (47a) agencé sur un composant et une arête d'encliquetage (47b) agencée sur un autre composant, coopérant avec celui-ci.

3. Vérin de travail selon la revendication 1 ou 2, **caractérisé en ce que** le coussinet (28) est fixé dans sa position de travail sans coaction de la racle (29) de manière immobile axialement par rapport au boîtier (2).

4. Vérin de travail selon l'une quelconque des revendications 1 à 3, **caractérisé en ce que** le coussinet (28) présente au moins une saillie de fixation (55) dépassant radialement vers l'extérieur, laquelle agit dans la position de travail pour le verrouillage axial du coussinet (28) derrière une surface d'appui (63) reliée fixement au boîtier (2), logée en amont de celui-ci axialement, laquelle surface est formée de manière appropriée par le flanc d'une cavité de retenue (57) de type nervure réalisée sur la périphérie intérieure du passage de boîtier (23).

5. Vérin de travail selon la revendication 4, **caractérisé en ce que** l'au moins une saillie de fixation (55) est un élément d'un anneau métallique (54) qui est fixé sur un corps de coussinet (34) se composant de matériau plastique du coussinet (28).

6. Vérin de travail selon l'une quelconque des revendications 1 à 5, **caractérisé en ce que** le coussinet (28) peut être amené à l'aide d'un processus d'enfichage et de rotation dans la position de travail, l'au moins une saillie de fixation (55) parvenant lors de l'enfichage axial du coussinet (28) dans une position intermédiaire se trouvant axialement plus bas que la surface d'appui (63) dans le passage de boîtier (23), de laquelle elle parvient lors de la rotation contiguë du coussinet (28) dans une position de verrouillage venant en prise derrière la surface d'appui (63).

7. Vérin de travail selon l'une quelconque des revendications 1 à 6, **caractérisé en ce que** le coussinet (28) est bloqué en rotation dans la position de travail relative au boîtier (2), de manière appropriée du fait que la racle (29) est verrouillée de manière non rotative par rapport au boîtier (2) et le coussinet (28) est verrouillé de manière non rotative par rapport à la racle (29).

8. Vérin de travail selon la revendication 7, **caractérisé en ce que** la racle (29) présente au moins une saillie de verrouillage (64) en forme de tige de manière appropriée, pénétrant axialement en direction du coussinet (28), qui s'engage non seulement dans au moins un évidement de verrouillage (66, 67) agencé sur le boîtier (2) mais aussi dans au moins un évidement de verrouillage (68) réalisé sur le coussinet (28), agencé en alignement axialement avec celui-ci.

9. Vérin de travail selon la revendication 8, **caractérisé en ce que** l'au moins une saillie de verrouillage (64) est agencée sur une saillie porteuse (72) dépassant radialement vers l'extérieur de la racle (29).

10. Vérin de travail selon l'une quelconque des revendications 1 à 9, **caractérisé en ce que** la racle (29) pénètre côté avant dans le passage de boîtier (23), celle-ci présentant de manière appropriée un contour étanche (46) s'étendant autour de sa périphérie extérieure, lequel repose de manière étanche contre la périphérie intérieure du passage de boîtier (23).

11. Vérin de travail selon l'une quelconque des revendications 1 à 10, **caractérisé en ce qu'**au moins une languette de retrait (74) dépasse radialement vers l'extérieur de la racle (29), laquelle languette sert à l'introduction d'une force de retrait détachant la racle (29) du coussinet (28) et est réalisée de manière appropriée flexible et élastique.

12. Vérin de travail selon l'une quelconque des revendications 1 à 11, **caractérisé en ce que** la section transversale entourée par le coussinet (28) et la racle (29) est réalisée selon le contour extérieur de la tige de piston (22) de manière circulaire ou non circulaire.

13. Vérin de travail selon l'une quelconque des revendications 1 à 12, **caractérisé en ce qu'**une garniture (36) annulaire est agencée et en particulier fixée de manière indétachable sur le côté arrière du coussinet (28) en regard de la racle (29).

14. Vérin de travail selon l'une quelconque des revendications 1 à 13, **caractérisé en ce que** le passage de boîtier (23) est réalisé dans une paroi terminale (5) fixée comme un couvercle sur une section de tube (4) du boîtier (2), laquelle présente de manière appropriée une partie intérieure (76) et une partie extérieure (77) enfichée axialement sur la partie intérieure (76), la partie intérieure (76) définissant conjointement avec la partie extérieure (77) au moins une cavité de retenue (57) de type rainure utilisée pour la fixation du coussinet (28).
